# EUROPÄISCHE PATENTSCHRIFT

(11) **EP 2 018 739 B1**
(45) Veröffentlichungstag und Bekanntmachung des Hinweises auf die Patenterteilung: **09.12.2009**
(21) Anmeldenummer: 07724309.5
(22) Anmeldetag: 17.04.2007
(51) Int. Cl.: H04L 12/40, A63H 18/12, A63H 18/16

(54) **VERFAHREN ZUM BETREIBEN EINES DIGITALEN STEUERSYSTEMS FÜR MEHRERE ZU STEUERNDE OBJEKTE**
METHOD FOR OPERATING A DIGITAL CONTROL SYSTEM FOR A PLURALITY OF OBJECTS TO BE CONTROLLED
PROCÉDÉ POUR LE FONCTIONNEMENT D'UN SYSTÈME DE COMMANDE NUMÉRIQUE POUR PLUSIEURS OBJETS À COMMANDER

(30) Priorität: 17.05.2006 DE 102006023133
(43) Veröffentlichungstag der Anmeldung: 28.01.2009
(73) Patentinhaber: Stadlbauer Spiel- und Freizeitartikel GmbH, 90449 Nürnberg (DE)
(72) Erfinder: Stadlbauer Spiel- und Freizeitartikel GmbH, 90449 Nürnberg (DE)
(74) Vertreter: Zeitler - Volpert - Kandlbinder
(86) Internationale Anmeldenummer: PCT/EP2007/003372
(87) Internationale Veröffentlichungsnummer: WO 2007/131586

(56) Entgegenhaltungen:
- EP-A- 1 555 054
- EP-A1- 1 557 216
- DE-A1- 3 009 557
- US-A1- 2004 113 022
- US-A1- 2006 073 760

## Beschreibung

Die vorliegende Erfindung bezieht sich auf ein Verfahren zum Betreiben eines digitalen Steuersystems für mehrere zu steuernde Objekte mit jeweils wenigstens einem Digitaldekoder in jedem zu steuernden Objekt und mit mehreren Bediengeräten, die jeweils wenigstens ein Betätigungselement zum Steuern eines dem Bediengerät zugeordneten Objekts aufweisen, wobei zu den Digitaldekodern digital kodierte Datenpakete übertragen werden, die jeweils wenigstens Zustandsdaten des wenigstens einen Betätigungselementes eines Bediengerätes sowie eine digitale Adresse beinhalten, die die Zuordnung zwischen dem Bediengerät und einem Objekt dadurch herstellt, dass jedem Bediengerät eine digitale Adresse zugeordnet ist und in dem Digitaldekoder die digitale Adresse desjenigen Bediengerätes gespeichert ist, dem das Objekt zugeordnet ist, wobei der Digitaldekoder in einem Normalmodus die Datenpakete auswertet und lediglich Daten oder von den Daten abhängige Steuerbefehle von solchen Datenpaketen an das Objekt weitergibt, die dieselbe digitale Adresse beinhalten, die in dem Digitaldekoder gespeichert ist, gemäß dem Oberbegriff des Anspruchs 1.

Digitale Steuersysteme sind beispielsweise bei Modelleisenbahnen oder spurgeführten Autorennbahnen bekannt. Hierbei weist jedes zu steuernde Objekt einen Digitaldekoder auf, der digital kodierte Daten, welche in Form von Datenpakten übertragen werden, entschlüsselt und entsprechende Steuerbefehle an das Fahrspielzeug weiter gibt. Diese Steuerbefehle betreffen beispielsweise eine Fahrgeschwindigkeit des zu steuernden Objektes. Damit über eine Übertragungsstrecke der digital kodierten Daten mehrere zu steuernde Objekte gleichzeitig und unabhängig voneinander von mehreren Spielern gesteuert werden können, sind mehrere Bediengeräte vorgesehen, wobei jedem Bediengerät eine digitale Adresse zugeordnet ist. Die digital kodierten Daten enthalten neben Steuerbefehlen auch eine digitale Adresse, die einer digitalen Adresse eines bestimmten Bediengerätes entspricht. Mit anderen Worten sind die digital kodierten Daten, welche Steuerdaten bzw. Steuerbefehle eines ganz bestimmten Bediengerätes enthalten, mit der digitalen Adresse dieses Bediengerätes versehen. In jedem Digitaldekoder ist eine individuelle digitale Adresse hinterlegt, wobei jeder Digitaldekoder die digitalen Adressen der empfangenen digital kodierten Daten auswertet und nur solche digital kodierten Daten für die Steuerung des Objektes berücksichtigt, die diejenige digitale Adresse beinhalten, die in dem Digitaldekoder hinterlegt ist. Alle anderen digital kodierten Daten werden verworfen. Auf diese Weise ist eine eineindeutige Zuordnung zwischen den Bediengeräten und den zu bewegenden Objekten hergestellt und es können alle Steuerdaten über einen einzigen, gemeinsamen Übertragungskanal oder Übertragungsweg übertragen werden.

Um in den Digitaldekodern der zu steuernden Objekte jeweils unterschiedliche digitale Adressen hinterlegen zu können, ist es notwendig, die Programmierung der digitalen Adresse verändern zu können. Hierzu ist es beispielsweise bekannt, auf einer Schaltungsplatine der Digitaldekoder ein Bauteil anzuordnen, welches so genannte DIP-Schalter aufweist, die von außen zugänglich und manuell in zwei verschiedene Stellungen bewegbar sind. Die Kombination der Stellungen der DIP-Schalter entspricht dabei jeweils einer digitalen Adresse. Dieses Verfahren der manuellen Programmierung der in dem Digitaldekoder hinterlegten digitalen Adresse ist jedoch umständlich, da jeweils erst aus einer Tabelle eine Zuordnung einer gewünschten digitalen Adresse zu einer Stellungskombination der DIP-Schalter bestimmt werden muss. Außerdem ist das Bauteil mit DIP-Schaltern kostenintensiv. Weiterhin muss in einem Gehäuse des Objektes maßgenau eine Aussparung vorgesehen werden, durch die die DIP-Schalter zugänglich sind. Zudem wird aufgrund der Baugröße des DIP-Schalters erheblich mehr Bauraum benötigt.

Es ist daher beispielsweise auch bekannt, die digitale Adresse elektronisch in dem Digitaldekoder zu speichern. Hierzu ist ein Programmiermodus notwendig, in den der Digitaldekoder durch die Übertragung einer speziellen Befehlssequenz als kodierte Daten versetzt wird. Dies hat jedoch den Nachteil, dass alle Digitaldekoder, deren digitale Adresse nicht verändert werden sollen, von dem gemeinsamen Übertragungsweg der digital kodierten Daten entfernt werden müssen, da diese sonst ebenfalls in den Programmiermodus wechseln, wenn die spezielle Befehlssequenz übertragen wird. In der Regel wird daher der zu programmierende Digitaldekoder aus dem digitalen Steuersystem entfernt und mit einer speziellen Programmiervorrichtung, beispielsweise einer Programmierschiene, verbunden. Hiermit werden auch andere Daten in dem Digitaldekoder gespeichert, die beispielsweise ein vorbestimmtes Brems- oder Beschleunigungsverhalten des zu steuernden Objektes bestimmen, oder andere physikalische und/oder elektrische Eigenschaften betreffen.

Aus der DE 199 32 456 C1 ist eine Anordnung zum Programmieren von mit digitalen Dekodern ausgerüsteten Funktionsartikeln bekannt. Für jedes zu steuernde Objekt ist eine von außen betätigbare Schalteinrichtung vorhanden, mit der das Objekt vom üblichen Betriebsmodus in einen Programmiermodus umgeschaltet werden kann. Die Programmierung findet dann mit Hilfe eines herkömmlichen, auch für den normalen Betrieb verwendeten, Bediengerätes statt. Im Programmiermodus entfalten die am Bediengerät getätigten Befehle eine andere Wirkung. Der Programmiermodus wird durch Abschalten der Gleisspannung beendet.

Aus der DE 103 23 200 A1 ist ein Modellfahrzeugsystem bekannt, bei dem das Bediengerät eine zusätzliche Eingabevorrichtung zur Erzeugung codierter Programmierungsbefehls-Steuersignale aufweist. Beim Auftreten dieser Signale schaltet ein Decoder in einem Modellfahrzeug in einen Programmiermodus um. Die Programmierungsbefehls-Steuersignale weisen einen Signalspannungsimpuls auf, welcher gegenüber der normalen Betriebsspannung einen erhöhten Spannungspegel aufweist.

Document DE 1 557 216 A1 veröffentlicht ein Verfahren gemäß des Oberbegriffs des Anspruchs 1.

Der Erfindung liegt die Aufgabe zugrunde, ein Verfahren der o.g. Art dahingehend zu verbessern, dass auf einfache und schnelle Art Daten und Verhaltensmodi in einen Digitaldekoder in einem zu steuernden Objekt einprogrammiert werden können.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Bei einem Verfahren der o.g. Art ist es erfindungsgemäß vorgesehen, dass in wenigstens einem Digitaldekoder des digitalen Steuersystems die Zustandsdaten von jeweils wenigstens einem Betätigungselement aller Bediengeräte des digitalen Steuersystems erfasst werden und dass nach einem Trennen und wieder Verbinden dieses wenigstens einen Digitaldekoders von bzw. mit einer Energieversorgung dieser Digitaldekoder in einen Programmiermodus wechselt, wenn bei dem Trennen dieses Digitaldekoders von der Energieversorgung die Zustandsdaten von dem wenigstens einen Betätigungselement wenigstens eines ersten Bediengerätes einen ersten vorbestimmten Zustand aufweisen und bei dem wieder Verbinden mit der Energieversorgung die Zustandsdaten von dem wenigstens einen Betätigungselement dieses ersten Bediengerätes einen vom ersten vorbestimmten Zustand unterschiedlichen zweiten vorbestimmten Zustand aufweisen.

Dies hat den Vorteil, dass ohne Ausbau des Dekoders aus dem Objekt sowie auch im laufenden Betrieb des digitalen Steuersystems ein einzelner Digitaldekoder individuell programmiert werden kann, ohne dass andere mit dem digitalen Steuersystem verbundene Digitaldekoder entfernt werden müssen oder der zu programmierende Digitaldekoder mit einem vom digitalen Steuersystem getrennten Datenübertragungssystem verbunden werden muss.

Beispielsweise ist der erste vorbestimmte Zustand die Betätigung wenigstens eines ersten vorbestimmten Betätigungselements des ersten Bediengerätes und der zweite vorbestimmte Zustand die Betätigung wenigstens eines zweiten vorbestimmten Betätigungselements des ersten Bediengerätes.

Zum Programmieren des Digitaldekoders werden in dem Programmiermodus in Abhängigkeit von wenigstens einem vom zweiten vorbestimmten Zustand unterschiedlichen, nach dem Wechsel in den Programmiermodus auftretenden dritten vorbestimmten Zustand des wenigstens einen Betätigungselementes des ersten Bediengerätes Daten in dem Digitaldekoder abgespeichert.

Zweckmäßigerweise verlässt der Digitaldekoder den Programmiermodus und wechselt zurück in den Normalmodus, wenn die Daten abgespeichert sind oder wenn der nächste Zustand des wenigstens einen Betätigungselementes des ersten Bediengerätes nach dem zweiten vorbestimmten Zustand kein vorbestimmter dritter Zustand ist oder wenn nach dem Wechsel in den Programmiermodus eine vorbestimmte Zeitspanne vergangen ist ohne dass ein weiterer Zustand des wenigstens einen Betätigungselementes des ersten Bediengerätes eintritt.

Eine einfache, schnelle und im laufenden Betrieb durchführbare Änderung der Zuordnung eines Objektes zu einem Bediengerät erzielt man dadurch, dass die abgespeicherten Daten die Adresse des Bediengerätes umfassen.

Beispielsweise ist der dritte vorbestimmte Zustand wenigstens eine Betätigung wenigstens eines dritten vorbestimmten Betätigungselements des Bediengerätes oder wenigstens eine Betätigung des ersten und/oder zweiten vorbestimmten Betätigungselements oder das nicht Betätigen aller Betätigungselement des ersten Bediengerätes.

In einer beispielhaften Ausführungsform werden die Zustandsdaten von allen Bediengeräten in dem Digitaldekoder derart gespeichert, dass diese Zustandsdaten nach dem Trennen von der Energieversorgung für wenigstens eine vorbestimmte Zeit erhalten bleiben. Um den ersten und zweiten Zustand zu erkennen und ggf. in den Programmiermodus zu wechseln ist es in dieser bevorzugten Ausführungsform vorgesehen, dass von dem Digitaldekoder die nach dem wieder Verbinden mit der Energieversorgung eingehenden Datenpakete ausgewertet, die Zustandsdaten der Betätigungselemente aller Bediengeräte erfasst und mit den gespeicherten Zustandsdaten verglichen werden.

In einer alternativen beispielhaften Ausführungsform, wird in dem Digitaldekoder eine Information darüber gespeichert, bei welchem Bediengerät die Zustandsdaten den ersten vorbestimmten Zustand aufweisen und wird diese Information derart gespeichert, dass diese auch nach dem Trennen von der Energieversorgung für eine vorbestimmte Zeit zur Verfügung steht. Um den ersten und zweiten Zustand zu erkennen und ggf. in den Programmiermodus zu wechseln ist es in dieser alternativen bevorzugten Ausführungsform vorgesehen, dass von dem Digitaldekoder die nach dem wieder Verbinden mit der Energieversorgung eingehenden Datenpakete ausgewertet werden und festgestellt wird, ob die Zustandsdaten desjenigen Bediengerätes, dessen Zustandsdaten beim Trennen von der Energieversorgung den ersten vorbestimmten Zustand aufwiesen nach dem wieder Verbinden mit der Energieversorgung den zweiten vorbestimmten Zustand aufweisen.

In einer besonders bevorzugten Ausführungsform sind die zu steuernden Objekte Fahrspielzeuge einer spurgeführten Autorennbahn, die Bediengeräte Handregler und umfassen die Betätigungselemente eines Handreglers einen stufenlos zwischen einer vollständig aus dem Handregler bis zu einem Anschlag heraus geschobenen ersten Stellung und einer vollständig in den Handregler hinein gedrückten zweiten Stellung verstellbaren Stößel sowie wenigstens einen Schalter, welcher eine erste und wenigstens eine zweite Stellung aufweist und in die erste Stellung mittels Federkraft gedrückt und entgegen der Federkraft manuell in die zweite Stellung betätigbar ist, wobei die digital kodierten Datenpakete über mindestens zwei Stromschienen der spurgeführten Autorennbahn an die Digitaldekoder der Fahrspielzeuge übertragen werden und Zustandsdaten der Stellung des Stößels und des Schalters enthalten, wobei ferner der erste vorbestimmte Zustand dadurch definiert ist, dass bei einem Handregler der Schalter in die zweite Stellung gedrückt ist und sich der Stößel in der ersten Stellung befindet.

Beispielsweise ist der zweite vorbestimmte Zustand dadurch definiert, dass sich der Stößel in der zweiten Stellung und der Schalter in der ersten Stellung befindet.

Zweckmäßigerweise wird zum Trennen von der Energieversorgung das Fahrspielzeug von der Autorennbahn abgenommen und zum wieder Verbinden mit der Energieversorgung das Fahrspielzeug wieder auf die Autorennbahn aufgesetzt.

Eine Zuordnung eines Fahrspielzeugs bzw. dessen Digitaldekoders zu einem Bediengerät programmiert man dadurch, dass einer der dritten vorbestimmten Zustände dadurch definiert ist, dass sich der Stößel in der ersten Stellung und der Schalter in der ersten Stellung befindet, wobei bei diesem dritten vorbestimmten Zustand wenigstens die digitale Adresse des Bediengerätes in dem Digitaldekoder des Fahrspielzeugs abgespeichert wird.

Eine Programmierung eines Fahrspielzeugs als so genanntes Pace Car erzielt man dadurch, dass einer der dritten vorbestimmten Zustände dadurch definiert ist, dass sich der Stößel in der zweiten Stellung befindet und der Schalter innerhalb einer vorbestimmten Zeitspanne zweimal von der ersten Stellung in die zweite Stellung und wieder zurück wechselt, wobei bei diesem dritten vorbestimmten Zustand eine vorbestimmte, feste Fahrgeschwindigkeit für dieses Fahrspielzeug in dem Digitaldekoder des Fahrspielzeugs abgespeichert wird.

Eine Programmierung eines Fahrspielzeugs als so genanntes Ghost Car erzielt man dadurch, dass einer der dritten vorbestimmten Zustände dadurch definiert ist, dass sich der Stößel in der zweiten Stellung befindet, der Schalter innerhalb einer vorbestimmten Zeitspanne einmal von der ersten Stellung in die zweite Stellung und wieder zurück wechselt und der Schalter nach Ablauf der vorbestimmten Zeitspanne ein weiteres mal von der ersten Stellung in die zweite Stellung und wieder zurück wechselt, wobei bei diesem dritten vorbestimmten Zustand eine feste Fahrgeschwindigkeit für dieses Fahrspielzeug in dem Digitaldekoder des Fahrspielzeugs abgespeichert wird, wobei diese feste Fahrgeschwindigkeit einer Stellung des Stößels zum Zeitpunkt des zweiten Wechsels des Schalters zwischen erster und zweiter Stellung entspricht.

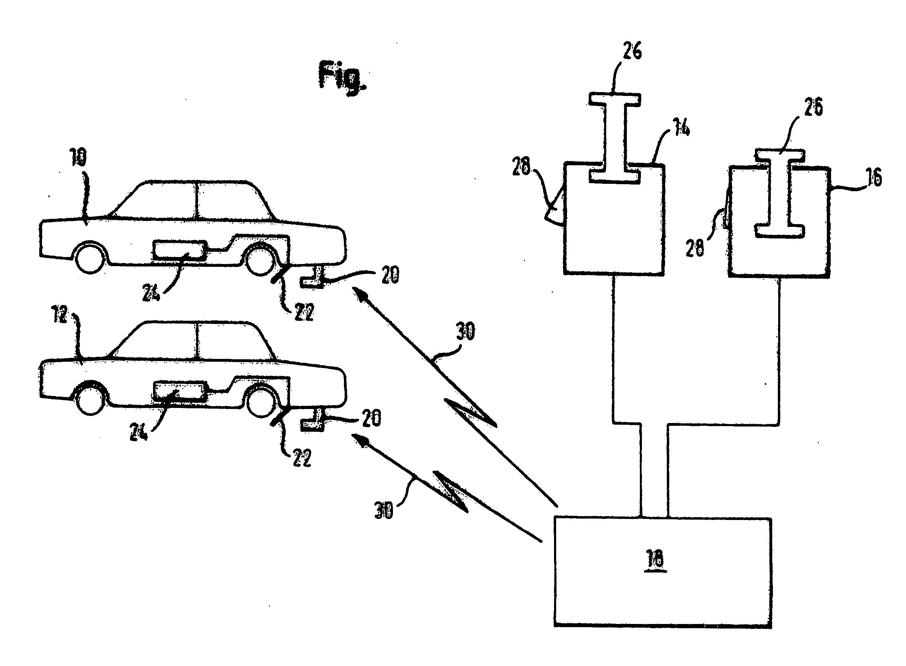

Die Erfindung wird im Folgenden anhand der Zeichnung näher erläutert. Diese zeigt in der einzigen Figur eine beispielhafte, schematische Darstellung eines digitalen Steuersystems für spurgeführte Fahrspielzeuge.

Nachfolgend wird die Erfindung lediglich beispielhaft anhand eines digitalen Steuersystems für spurgeführte Fahrspielzeuge erläutert. Die Erfindung ist jedoch nicht auf spurgeführte Fahrspielzeuge beschränkt, sondern kann bei jeder Art von digitaler Steuerung von zu steuernden Objekten Anwendung finden, so beispielsweise auch bei Übertragung von Steuerdaten an die Fahrspielzeuge über eine Funkstrecke auf einer gemeinsamen Frequenz.

Das in der einzigen Figur schematisch dargestellte, digitale Steuersystem für spurgeführte Fahrspielzeuge 10, 12 umfasst Bediengeräte 14 und 16, nachfolgend auch Handregler genannt, die mit einer Steuerzentrale 18 verbunden sind. Jedes Fahrspielzeug 10, 12 weist einen Führungskiel 20, Stromabnehmer 22 und einen Digitaldekoder 24 auf. Der Führungskiel 20 ist zum Eingriff in eine Führungsnut einer nicht dargestellten Autorennbahn ausgebildet. Auf der Autorennbahn sind benachbart zu jeder Führungsnut in bekannter Weise zwei oder drei Stromschienen angeordnet, wobei bei auf die Autorennbahn aufgesetztem Fahrspielzeug 10, 12 die Stromabnehmer 22 einen elektrischen Kontakt mit den Stromschienen herstellen. Über die Stromschienen und die Stromabnehmer 22 wird das Fahrspielzeug 10, 12, der Digitaldekoder 24, weitere elektrische Bauteile sowie ein Antriebsmotor (nicht dargestellt) mit elektrischer Energie versorgt.

Jedes Bediengerät 14, 16 weist ein erstes Betätigungselement in Form eines Stößels 26 und ein zweites Betätigungselement in Form eines Schalters 28 auf. Der Stößel 26 ist stufenlos zwischen einer ersten Position, in der er aus dem Bediengerät 14, 16 herausragt, und einer zweiten Position, in der er in das Bediengerät 14, 16 hinein geschoben ist, manuell verschiebbar. Hierbei ist der Stößel 26 mit einer Federkraft beaufschlagt, die den Stößel 26 in die erste Position drückt und entgegen der Federkraft manuell stufenlos bis zur zweiten Position verschiebbar. Der Schalter 28 ist manuell zwischen einer ersten und einer zweiten Position umschaltbar, wobei eine Federkraft den Schalter 28 in die erste Position drückt und mittels einer manuellen Betätigung entgegen der Federkraft in die zweite Position gedrückt werden kann. Bei dem einen in der einzigen Figur dargestellten Bediengerät 14 befinden sich die Betätigungselemente Stößel 26 und Schalter 28 jeweils in der ersten Position, d.h. in der Stellung ohne jede manuelle Betätigung, und bei dem anderen in der einzigen Figur dargestellten Bediengerät 16 befinden sich die Betätigungselemente Stößel 26 und Schalter 28 jeweils in der zweiten Position bei manueller Betätigung durch einen Spieler.

In bekannter Weise erfolgt die Steuerung der Fahrspielzeuge 10, 12 mittels der Bediengeräte 14, 16 derart, dass die Geschwindigkeit der Fahrspielzeuge 10, 12 über die Stößel 26 gesteuert wird. Je weiter der Stößel 26 in das jeweilige Bediengerät 14, 16 hinein gedrückt wird, desto höher wird die Geschwindigkeit des diesem Bediengerät 14, 16 zugeordneten Fahrspielzeuges 10, 12. In der zweiten Stellung des Stößels 26 hat das zugeordnete Fahrspielzeug 10, 12 die maximale Geschwindigkeit und in der ersten Stellung des Stößels 26 hat das zugeordnete Fahrspielzeug 10, 12 die Geschwindigkeit 0, d.h. das Fahrspielzeug 10, 12 steht.

In dem digitalen Steuersystem ist jedes Bediengerät 14, 16 eindeutig einem Fahrspielzeug 10, 12 zugeordnet, so dass jeder Spieler, der ein Bediengerät 14, 16 in der Hand hält, ein Fahrspielzeug 10, 12 über die Autorennbahn steuert. Hierzu sind die Bediengeräte 14, 16 mit der Steuerzentrale 18 verbunden. Diese setzt die Stellungen der Betätigungselemente 26, 28 eines jeden Bediengerätes 14, 16 in digital kodierte Signale um und fügt jedem digital kodierten Signal oder Datenpaket eine digitale Adresse hinzu, die ein bestimmtes Bediengerät 14, 16 identifiziert. Die Steuerzentrale 18 sendet die Datenpakete über die Stromschienen der Autorennbahn, wie mit Pfeilen 30 symbolisiert, so dass diese in jedem Fahrspielzeug 10, 12 über die Stromabnehmer 22 aufgenommen und an den jeweiligen Digitaldekoder 24 weitergeleitet werden. In den Digitaldekodern 24 werden in einem Normalmodus die digital kodierten Signale oder Datenpakete ausgewertet, wobei zuerst die jeweilige digitale Adresse gelesen wird. In jedem Digitaldekoder 24 ist eine digitale Adresse gespeichert und der Digitaldekoder 24 vergleicht die digitale Adresse eines jeden empfangenen Datenpaketes mit der gespeicherten digitalen Adresse. Stimmen beide überein, so identifiziert der Digitaldekoder 24 das entsprechende Datenpaket als zu diesem Fahrspielzeug 10, 12 gehörend und wertet die in dem Datenpaket enthaltenen digital kodierten Daten aus. Entsprechend diesen Daten gibt der Digitaldekoder 24 Steuerbefehle an das Fahrspielzeug 10, 12, insbesondere hinsichtlich der Fahrgeschwindigkeit.

Erfindungsgemäß ist es vorgesehen, dass jeder Digitaldekoder 24 die Datenpakete mit anderer digitaler Adresse als derjenigen, die in dem Digitaldekoder 24 gespeichert ist, nicht vollständig verwirft, sondern die in den Datenpaketen enthaltenen Informationen hinsichtlich des Zustandes der jeweiligen Betätigungselemente 26, 28 aller Bediengeräte 14, 16 auswertet und in einer Tabelle speichert. Somit liegt zu jedem Zeitpunkt in jedem Digitaldekoder 24 eine Tabelle vor, die die Zustandsdaten der Betätigungselemente 26, 28 aller Bediengeräte 14, 16 enthält. Der Begriff "Zustandsdaten" oder "Zustand" bezeichnet hierbei für jedes Bediengerät 14, 16 die Stellung der jeweiligen Betätigungselemente 26, 28, d.h. ob sich der Schalter 28 in der ersten oder zweiten Position befindet und ob sich der Stößel 26 in der ersten, zweiten oder einer Position dazwischen befindet. Diese Tabelle wird in jedem Digitaldekoder 24 derart abgespeichert, dass diese Daten auch nach einem Trennen des Digitaldekoders 24 von der Energieversorgung für eine vorbestimmte Zeitspanne erhalten bleiben.

Wird nun der Digitaldekoder 24 beispielsweise des Fahrspielzeugs 10 zu einem beliebigen Zeitpunkt von der Energieversorgung getrennt und kurz darauf wieder mit der Energieversorgung verbunden, was beispielsweise durch kurzes Abheben des Fahrspielzeugs 10 von der Autorennbahn und anschließendes wieder darauf stellen realisiert wird, so liegen die Zustandsdaten alle Betätigungselemente 26, 28 aller Bediengeräte 14, 16 in der gespeicherten Tabelle vor. Der Digitaldekoder 24 wertet nun zunächst die in der Tabelle gespeicherten Zustandsdaten vor dem Trennen von der Energieversorgung aus und prüft, ob bei einem Bediengerät 14, 16 zum Zeitpunkt des Trennens von der Energieversorgung ein vorbestimmter erster Zustand vorlag. Dies ist beispielsweise ein Zustand, bei dem sich der Schalter 28 in der zweiten Position befindet, also manuell gedrückt ist, und sich der Stößel 26 in der ersten Position befindet, also nicht manuell betätigt ist. Findet der Digitaldekoder 24 ein Bediengerät, beispielsweise das Bediengerät 14, mit einem derartigen Zustand der Betätigungselemente 26, 28 in der Tabelle, so prüft er nach dem wieder Verbinden mit der Energieversorgung, ob bei eben diesem Bediengerät 14 ein zweiter vorbestimmter Zustand beim wieder Verbinden mit der Stromversorgung vorliegt. Dieser zweite vorbestimmte Zustand ist beispielsweise dadurch definiert, dass sich der Schalter 28 in der ersten Position befindet, also nicht manuell betätigt ist, und sich der Stößel 26 in der zweiten Position befindet, also manuell entgegen der Federkraft bis zum Anschlag in das Bediengerät 14 eingeschoben bzw. hineingedrückt ist. Liegt beim Bediengerät 14 dieser zweite Zustand vor, so wechselt der Digitaldekoder 24 in einen Programmiermodus, bei dem Daten in den Digitaldekoder 24 gespeichert werden können.

Das besondere an dieser Verfahrensweise liegt darin, dass alle anderen im digitalen Steuersystem befindlichen Digitaldekoder 24 nicht in den Programmiermodus wechseln, da bei diesen eine kurzzeitige Trennung von der Energieversorgung nicht erfolgte und somit nicht alle Bedingungen für den Wechsel in den Programmiermodus erfüllt sind. Daher kann ein bestimmter Digitaldekoder 24 im laufenden Betrieb des digitalen Steuersystems in den Programmiermodus versetzt werden, ohne dass alle anderen, nicht zu programmierenden Digitaldekoder 24 aus dem Übertragungsweg 30 entfernt werden müssen.

Sobald sich der Digitaldekoder 24 im Programmiermodus befindet, wertet dieser die Zustandsdaten der Betätigungselemente 26, 28 des Bediengerätes 14, welches ihn in den Programmiermodus versetzt hat, weiter aus und prüft, welcher Zustand der Betätigungselemente 26, 28 an dem Bediengerät 14 als nächstes auftritt. Es sind vorzugsweise verschiedene dritte vorbestimmte Zustände in dem Digitaldekoder 24 hinterlegt, die jeweils zum Ablauf weiterer Programmierprozesse führen, falls diese eintreten. Falls der nächste Zustand der Betätigungselemente 26, 28 des Bediengerätes 14 kein dritter vorbestimmter Zustand ist, endet der Programmiermodus, ohne dass Daten in dem Digitaldekoder 24 geändert bzw. gespeichert werden.

Wird beispielsweise als nächster Zustand der Betätigungselemente 26, 28 des Bediengerätes 14 ein Zustand detektiert, bei dem sich sowohl der Stößel 26 als auch der Schalter 28 in der ersten Position befinden, d.h. beide Betätigungselemente 26, 28 des Bediengerätes 14 sind nicht manuell betätigt, speichert der Digitaldekoder 24 die digitale Adresse dieses Bediengerätes 14 ab, so dass ab sofort alle Datenpakete mit der digitalen Adresse des Bediengerätes 14 zu Steuerbefehlen für das Fahrspielzeug 10 umgesetzt und alle mit anderer digitaler Adresse versehenen Datenpaket hinsichtlich der Steuerbefehle für dieses Fahrspielzeug 10 ignoriert werden. Mit anderen Worten ist das Fahrspielzeug 10 von diesem Moment an dem Bediengerät 14 zugeordnet, wobei diese Änderung der Zuordnung zwischen Fahrspielzeug 10 und Bediengerät 14 im laufenden Betrieb erfolgt, d.h. während andere Fahrspielzeuge 12 von anderen Spielern gesteuert auf der Autorennbahn fahren, ohne dass die Programmierung der Digitaldekoder 24 in den anderen Fahrspielzeugen 12 oder die Steuerung der anderen Fahrspielzeuge 12 durch die anderen Spieler während der Programmierung des einen Digitaldekoders 24 von Fahrspielzeug 10 in irgendeiner Weise beeinträchtigt wird.

In der Praxis erfolgt eine Programmierung eines Digitaldekoders 24 des Fahrspielzeugs 10 auf beispielsweise den Handregler 14 durch einen Spieler dann beispielhaft folgendermaßen: Der Spieler nimmt den gewünschten Handregler 14 in die Hand und setzt des gewünschte Fahrspielzeug 10 auf die Autorennbahn. Da die gegenwärtige Programmierung des Digitaldekoders 24 dieses Fahrspielzeuges 10 nicht bekannt ist, hebt der Spieler zweckmäßigerweise das Fahrspielzeug 10 derart an, dass die angetriebenen Räder des Fahrspielzeugs 10 keinen Kontakt zur Autorennbahn haben, jedoch ein elektrischer Kontakt der Stromabnehmer 22 mit den Stromschienen der Autorennbahn besteht. Falls der Digitaldekoder 24 dieses Fahrspielzeugs 10 noch auf einen anderen Handregler 16 programmiert ist, den gerade ein anderer Spieler benutzt, drehen sich zwar ggf. die angetriebenen Räder, jedoch fährt das Fahrspielzeug 10 nicht unkontrolliert über die Autorennbahn. Anschließend drückt der Spieler den Schalter 28 des Handreglers 14 in die zweiter Position, hebt das Fahrspielzeug 10 vollständig von der Autorennbahn ab, so dass auch der elektrische Kontakt zwischen Stromschienen und Stromabnehmer 22 unterbrochen ist, lässt den Schalter 28 los, so dass dieser selbsttätig in die erste Position zurückkehrt, drückt den Stößel 26 des Handreglers 14 entgegen der Federkraft in die zweite Position, setzt das Fahrspielzeug 10 wieder auf die Autorennbahn auf, so dass der elektrische Kontakt zwischen Stromschienen und Stromabnehmer 22 wieder hergestellt ist, und lässt abschließend den Stößel 26 wieder los, so dass dieser selbsttätig in die erste Position zurückkehrt. Mit diesem einfachen und schnellen Verfahren ist nun der Digitaldekoder 24 in dem Fahrspielzeug 10 auf den Handregler 14 programmiert.

Mit anderen dritten vorbestimmten Zuständen oder Zustandsdaten der Betätigungselemente 26, 28 des Bediengerätes 14 können andere Daten in den Digitaldekoder 24 des Fahrspielzeugs 10 programmiert oder andere Programmierprozesse für diesen Digitaldekoder 24 ausgelöst werden. Wird beispielsweise nach dem Übergang in den Programmiermodus der Schalter 28 des Bediengerätes 14 bei weiterhin gedrücktem Stößel 26 einmal innerhalb einer vorbestimmten Zeitspanne manuell betätigt, so wird eine vorbestimmte feste Geschwindigkeit für dieses Fahrspielzeug 10 in dem Digitaldekoder 24 gespeichert. Sobald der Programmiermodus endet, was beispielsweise unmittelbar nach dem Speichern von Daten in den Digitaldekoder 24 der Fall ist, fährt dieses Fahrspielzeug 10 unabhängig von der Betätigung der Betätigungselemente 26, 28 an allen Bediengeräten 14, 16 mit der vorbestimmten Geschwindigkeit über die Autorennbahn. Dieses Fahrspielzeug ist damit als so genanntes Pace Car (Safety Car) programmiert, welches von den an einem Rennen beteiligten Fahrspielzeugen nicht überholt werden darf, analog dem Pace Car bei einem echten Formel-1-Rennen.

Zusätzlich kann als dritter vorbestimmter Zustand in den Digitaldekodern 24 ein Zustand hinterlegt sein, bei dem der Schalter 28 innerhalb der vorbestimmten Zeitspanne dreimal manuell betätigt wird. Dies setzt einen Programmierprozess in Gang, bei dem eine beliebige, vom Spieler mittels des Stößels 26 gewählte Geschwindigkeit in dem Digitaldekoder 24 als fest vorgegebene Geschwindigkeit abgespeichert werden kann. Der Digitaldekoder 24 bleibt zwar im Programmiermodus, wertet jedoch zunächst analog dem Normalmodus noch die Datenpakete mit der digitalen Adresse des Handreglers 14 aus und gibt entsprechende Steuerbefehle an das Fahrspielzeug 14 weiter, so dass der Spieler unter Betätigung des Stößels 26 des Bediengerätes 14 noch im Programmiermodus des Digitaldekoders 24 das Fahrspielzeug 10 über die Autorennbahn fahren und eine Geschwindigkeit ermitteln kann, bei welcher das Fahrspielzeug 10 an keiner Stelle aus der Bahn fliegt. Hat der Spieler diese Geschwindigkeit gefunden, hält er den Stößel 26 des Bediengerätes 14 in einer dieser Geschwindigkeit entsprechenden Position zwischen der ersten und der zweiten Position des Stößels 26 gedrückt und betätigt erneut kurzzeitig den Schalter 28 des Bediengerätes 14. Daraufhin speichert der Digitaldekoder die der Betätigung des Stößels 26 des Bediengerätes 14 entsprechende Geschwindigkeit als feste Geschwindigkeit ab, verlässt den Programmiermodus und wechselt zurück in den Normalmodus. Das Fahrspielzeug 10 fährt nunmehr unabhängig von der Betätigung der Betätigungselemente 26, 28 an allen Bediengeräten 14, 16 mit der vorbestimmten Geschwindigkeit über die Autorennbahn. Dieses Fahrspielzeug ist damit als so genanntes Ghost Car programmiert. Gegen dieses Ghost Car kann nun ein oder können mehrere Spieler ein Rennen fahren. Im Unterschied zum Pace Car, bei dem die vorbestimmte Geschwindigkeit sehr niedrig vorbestimmt ist, wählt der Spieler beim Ghost Car zweckmäßigerweise die maximal mögliche Geschwindigkeit aus, bei der Fahrspielzeug 10 gerade noch nicht aus der Bahn fliegt, um ein interessantes Rennen gegen das Ghost Car fahren zu können.

## Patentansprüche

1. Verfahren zum Betreiben eines digitalen Steuersystems für mehrere zu steuernde Objekte (10, 12), insbesondere für spurgeführte Fahrspielzeuge auf einer Autorennbahn, mit jeweils wenigstens einem Digitaldekoder (24) in jedem zu steuernden Objekt (10, 12) und mit mehreren Bediengeräten (14, 16), die jeweils wenigstens ein Betätigungselement (26, 28) zum Steuern eines dem Bediengerät (14, 16) zugeordneten Objekts (10, 12) aufweisen, wobei zu den Digitaldekodern (24) digital kodierte Datenpakete übertragen werden, die jeweils wenigstens Zustandsdaten des wenigstens einen Betätigungselementes (26, 28) eines Bediengerätes (14, 16) sowie eine digitale Adresse beinhalten, die die Zuordnung zwischen dem Bediengerät (14, 16) und einem Objekt (10, 12) **dadurch** herstellt, dass jedem Bediengerät (14, 16) eine digitale Adresse zugeordnet ist und in dem Digitaldekoder (24) die digitale Adresse desjenigen Bediengerätes (14, 16) gespeichert ist, dem das Objekt (10, 12) zugeordnet ist, wobei der Digitaldekoder (24) in einem Normalmodus die Datenpakete auswertet und lediglich Daten oder von den Daten abhängige Steuerbefehle von solchen Datenpaketen an das Objekt (10, 12) weitergibt, die dieselbe digitale Adresse beinhalten, die in dem Digitaldekoder (24) gespeichert ist,
**dadurch gekennzeichnet,**
**dass** in wenigstens einem Digitaldekoder (24) des digitalen Steuersystems die Zustandsdaten von jeweils wenigstens einem Betätigungselement (26, 28) aller Bediengeräte (14, 16) des digitalen Steuersystems erfasst werden und
**dass** nach einem Trennen und wieder Verbinden dieses wenigstens einen Digitaldekoders (24) von bzw. mit einer Energieversorgung dieser Digitaldekoder (24) in einen Programmiermodus wechselt, wenn bei dem Trennen dieses Digitaldekoders (24) von der Energieversorgung die Zustandsdaten von dem wenigstens einen Betätigungselement (26, 28) wenigstens eines ersten Bediengerätes (14, 16) einen ersten vorbestimmten Zustand aufweisen und bei dem wieder Verbinden mit der Energieversorgung die Zustandsdaten von dem wenigstens einen Betätigungselement (26, 28) dieses ersten Bediengerätes (14, 16) einen vom ersten vorbestimmten Zustand unterschiedlichen zweiten vorbestimmten Zustand aufweisen.

2. Verfahren nach Anspruch 1, **dadurch gekennzeichnet, dass** der erste vorbestimmte Zustand die Betätigung wenigstens eines ersten vorbestimmten Betätigungselements (26, 28) des ersten Bediengerätes (14, 16) und der zweite vorbestimmte Zustand die Betätigung wenigstens eines zweiten vorbestimmten Betätigungselements (26, 28) des ersten Bediengerätes (14, 16) ist.

3. Verfahren nach Anspruch 1 oder 2, **dadurch gekennzeichnet, dass** in dem Programmiermodus in Abhängigkeit von wenigstens einem vom zweiten vorbestimmten Zustand unterschiedlichen, nach dem Wechsel in den Programmiermodus auftretenden dritten vorbestimmten Zustand des wenigstens einen Betätigungselementes (26, 28) des ersten Bediengerätes (14, 16) Daten in dem Digitaldekoder (24) abgespeichert werden.

4. Verfahren nach Anspruch 3, **dadurch gekennzeichnet, dass** der Digitaldekoder (24) den Programmiermodus verlässt und zurück in den Normalmodus wechselt, wenn die Daten abgespeichert sind oder wenn der nächste Zustand des wenigstens einen Betätigungselementes (26, 28) des ersten Bediengerätes (14, 16) nach dem zweiten vorbestimmten Zustand kein vorbestimmter dritter Zustand ist oder wenn nach dem Wechsel in den Programmiermodus eine vorbestimmte Zeitspanne vergangen ist, ohne dass ein weiterer Zustand des wenigstens einen Betätigungselementes (26, 28) des ersten Bediengerätes (14, 16) eintritt.

5. Verfahren nach Anspruch 3 oder 4, **dadurch gekennzeichnet, dass** die abgespeicherten Daten wenigstens die digitale Adresse des Bediengerätes (14, 16) umfassen.

6. Verfahren nach einem der Ansprüche 3 bis 5, sofern auf Anspruch 2 rückbezogen, **dadurch gekennzeichnet, dass** der dritte vorbestimmte Zustand wenigstens eine Betätigung wenigstens eines dritten vorbestimmten Betätigungselements (26, 28) des Bediengerätes (14, 16) oder wenigstens eine Betätigung des ersten und/oder zweiten vorbestimmten Betätigungselements (26, 28) oder das nicht Betätigen aller Betätigungselemente (26, 28) des ersten Bediengerätes (14, 16) ist.

7. Verfahren nach einem der vorhergehenden Ansprüche, **dadurch gekennzeichnet, dass** die Zustandsdaten von allen Bediengeräten (14, 16) in dem Digitaldekoder (24) derart gespeichert werden, dass diese Zustandsdaten nach dem Trennen von der Energieversorgung für wenigstens eine vorbestimmte Zeit erhalten bleiben.

8. Verfahren nach Anspruch 7, **dadurch gekennzeichnet, dass** von dem Digitaldekoder (24) die nach dem wieder Verbinden mit der Energieversorgung eingehenden Datenpakete ausgewertet, die Zustandsdaten der Betätigungselemente (26, 28) aller Bediengeräte (14, 16) erfasst und mit den gespeicherten Zustandsdaten verglichen werden.

9. Verfahren nach einem der Ansprüche 1 bis 6, **dadurch gekennzeichnet, dass** in dem Digitaldekoder (24) eine Information darüber gespeichert wird, bei welchem Bediengerät (14, 16) die Zustandsdaten den ersten vorbestimmten Zustand aufweisen und dass diese Information derart gespeichert wird, dass diese auch nach dem Trennen von der Energieversorgung für eine vorbestimmte Zeit zur Verfügung steht.

10. Verfahren nach Anspruch 9, **dadurch gekennzeichnet, dass** von dem Digitaldekoder (24) die nach dem wieder Verbinden mit der Energieversorgung eingehenden Datenpakete ausgewertet werden und festgestellt wird, ob die Zustandsdaten desjenigen Bediengerätes (14, 16), dessen Zustandsdaten beim Trennen von der Energieversorgung den ersten vorbestimmten Zustand aufwiesen, nach dem wieder Verbinden mit der Energieversorgung den zweiten vorbestimmten Zustand aufweisen.

11. Verfahren nach einem der vorhergehenden Ansprüche, **dadurch gekennzeichnet, dass** die zu steuernden Objekte (10, 12) Fahrspielzeuge einer spurgeführten Autorennbahn sind, die Bediengeräte Handregler (14, 16) sind und die Betätigungselemente eines Handreglers einen stufenlos zwischen einer vollständig aus dem Handregler (14, 16) bis zu einem Anschlag heraus geschobenen ersten Stellung und einer vollständig in den Handregler hinein gedrückten zweiten Stellung verstellbaren Stößel (26) sowie wenigstens einen Schalter (28) umfassen, welcher eine erste und wenigstens eine zweite Stellung aufweist und in die erste Stellung mittel Federkraft gedrückt und entgegen der Federkraft manuell in die zweite Stellung betätigbar ist, wobei die digital kodierten Datenpakete über mindestens zwei Stromschienen der spurgeführten Autorennbahn an die Digitaldekoder (24) der Fahrspielzeuge übertragen werden und Zustandsdaten der Stellung des Stößels (26) und des Schalters (28) enthalten, wobei ferner der erste vorbestimmte Zustand **dadurch** definiert ist, dass bei einem Handregler (14, 16) der Schalter (28) in die zweite Stellung gedrückt ist und sich der Stößel (26) in der ersten Stellung befindet.

12. Verfahren nach Anspruch 11, **dadurch gekennzeichnet, dass** der zweite vorbestimmte Zustand **dadurch** definiert ist, dass sich der Stößel (26) in der zweiten Stellung und der Schalter (28) in der ersten Stellung befindet.

13. Verfahren nach Anspruch 11 oder 12, **dadurch gekennzeichnet, dass** zum Trennen von der Energieversorgung das Fahrspielzeug (10, 12) von der Autorennbahn abgenommen und zum wieder Verbinden mit der Energieversorgung das Fahrspielzeug (10, 12) wieder auf die Autorennbahn aufgesetzt wird.

14. Verfahren nach einem der Ansprüche 11 bis 13, sofern auf Anspruch 3 rückbezogen, **dadurch gekennzeichnet, dass** einer der dritten vorbestimmten Zustände **dadurch** definiert ist, dass sich der Stößel (26) in der ersten Stellung und der Schalter (28) in der ersten Stellung befindet, wobei bei diesem dritten vorbestimmten Zustand wenigstens die digitale Adresse des Bediengerätes (14, 16) in dem Digitaldekoder (24) des Fahrspielzeugs (10, 12) abgespeichert wird.

15. Verfahren nach einem der Ansprüche 11 bis 14, sofern auf Anspruch 3 rückbezogen, **dadurch gekennzeichnet, dass** einer der dritten vorbestimmten Zustände **dadurch** definiert ist, dass sich der Stößel (26) in der zweiten Stellung befindet und der Schalter (28) innerhalb einer vorbestimmten Zeitspanne zweimal von der ersten Stellung in die zweite Stellung und wieder zurück wechselt, wobei bei diesem dritten vorbestimmten Zustand eine vorbestimmte, feste Fahrgeschwindigkeit für dieses Fahrspielzeug (10, 12) in dem Digitaldekoder (24) des Fahrspielzeugs (10, 12) abgespeichert wird.

16. Verfahren nach einem der Ansprüche 11 bis 15, sofern auf Anspruch 3 rückbezogen, **dadurch gekennzeichnet, dass** einer der dritten vorbestimmten Zustände **dadurch** definiert ist, dass sich der Stößel (26) in der zweiten Stellung befindet, der Schalter (28) innerhalb einer vorbestimmten Zeitspanne einmal von der ersten Stellung in die zweite Stellung und wieder zurück wechselt und der Schalter nach Ablauf der vorbestimmten Zeitspanne ein weiteres mal von der ersten Stellung in die zweite Stellung und wieder zurück wechselt, wobei bei diesem dritten vorbestimmten Zustand eine feste Fahrgeschwindigkeit für dieses Fahrspielzeug (10, 12) in dem Digitaldekoder (24) des Fahrspielzeugs (10, 12) abgespeichert wird, wobei diese feste Fahrgeschwindigkeit einer Stellung des Stößels (26) zum Zeitpunkt des zweiten Wechsels des Schalters (28) zwischen erster und zweiter Stellung entspricht.

## Claims

1. Process for operating a digital control system for several objects (10, 12) to be controlled, in particular for track-guided toy vehicles on a car race track, with at least one digital decoder (24) in each object (10, 12) to be controlled and with several operating devices (14, 16), which in each case have at least one actuating element (26, 28) for controlling one of the objects (10, 12) assigned to the operating device (14, 16), where digitally encoded data packets are transmitted to the digital decoders (24), which contain in each case at least status information of the at least one actuating element (26, 28) of an operating device (14, 16), as well as a digital address which creates the assignment between the operating device (14, 16) and an object (10, 12), in that each operating device (14, 16) is assigned a digital address and the digital address of the operating device (14, 16) to which the object (10, 12) is assigned is stored in the digital decoder (24), where the digital decoder (24), in a normal mode, evaluates the data packets and forwards to the object (10, 12) only data or control commands dependent upon such data packets that contain the same digital address that is stored in the digital decoder (24),
**characterized in that,**
in at least one digital decoder (24) of the digital control system, the condition data of at least one actuating element (26, 28) in each case of all operating devices (14, 16) of the digital control system are detected
and
that after disconnecting and reconnecting this at least one digital decoder (24) from and to a power supply, this digital decoder (24) switches to a programming mode if, at the time of disconnecting this digital decoder (24) from the power supply, the condition data from the at least one actuating element 26, 28 of at least a
first operating device (14, 16) includes a first predetermined condition and, upon reconnecting to the power supply, the condition data of the at least one actuating element (26, 28) of this first operating unit (14, 16) includes a second predetermined condition which differs from the first predetermined condition.

2. Process according to Claim 1, **characterized in that**, the first predetermined condition is the actuation of a least one first predetermined actuating element (26, 28) of the first operating device (14, 16) and the second predetermined condition is the actuation of at least a second predetermined actuation element (26, 28) of the first operating device (14, 16).

3. Process according to Claim 1 or 2, **characterized in that**, in the programming mode, data are stored in the digital decoder (24), depending upon at least one third predetermined condition of the at least one actuating element (26, 28) of the first operating device (14, 16), which arises after the change to programming mode and which is different from the second predetermined condition.

4. Process according to Claim 3, **characterized in that**, the digital decoder (24) leaves the programming mode and returns to the normal mode when the data are stored or when the next condition of the at least one actuating element (26, 28) of the first operating device (14, 16) after the second predetermined condition is not a third predetermined condition, or if, after the change into the programming mode, a predetermined time period has elapsed without a further condition of the at least one actuating element (26, 28) of the first operating device (14, 16).

5. Process according to Claim 3 or 4, **characterized in that,** the stored data include at least the digital address of the operating device (14, 16).

6. Process according to one of the Claims 3 through 5, to the extent that reference is made to Claim 2, **characterized in that**, the third predetermined condition is at least an actuation of at least one third predetermined actuating element (26,28) of the operating device (14, 16) or at least one actuation of the first and/or second predetermined actuating elements (26, 28) or the non-actuation of all actuation elements (26, 28) of the first operating device (14, 16).

7. Process according to one of the foregoing claims, **characterized in that**, the condition data of all operating units (14, 16) are stored in the digital decoder (24) in such a manner that these condition data remain after the disconnection from the power supply for at least a predetermined time.

8. Process according to Claim 7, **characterized in that**, the data packets arriving after the reconnection to the power supply are evaluated by the digital decoder (24), the condition data of the actuating elements (26, 28) of all operating devices (14, 16) are detected and compared to the stored condition data.

9. Process according to one of the Claims 1 through 6, **characterized in that**, in the digital decoder (24), information is stored as to in which operating device (14, 16) the condition data show the first predetermined condition and that this information is stored in such a way that it is available even after disconnection from the power supply for a predetermined time period.

10. Process according to Claim 9, **characterized in that**, data packets arriving after reconnection to the power supply are evaluated by the digital decoder (24) and it is determined whether the condition data of that operating unit (14, 16) whose condition data at the time of disconnection from the power supply showed the first predetermined condition, after reconnection to the power supply show the second predetermined condition.

11. Process according to one of the foregoing Claims, **characterized in that**, the objects (10, 12) to be controlled are toy vehicles of a track guided car race track, the operating devices are manual control units (14, 16) and the actuating elements of a manual control unit are a tappet (26) which can be moved without steps between a first position protruding completely from the manual control unit (14, 16) up to a stop and a second position pressed completely into the manual control unit, as well as at least one switch (28) which has a first and at least one second position and is pushed into the first position by spring power and can be actuated manually against the spring power into the second position, where the digitally encoded data packets are transmitted over at least two current rails of the track-guided car race track, to the digital decoders (24) of the toy vehicles and contain condition data concerning the position of the tappet (26) and the switch (28), where also the first predetermined condition is defined by the fact that in one manual control unit (14, 16) the switch (28) is pressed into the second position and the tappet (26) is in the first position.

12. Process according to Claim 11, **characterized in that,** the second predetermined condition is defined by the tappet (26) being in the second position and the switch (28) in the first position.

13. Process according to Claim 11 or 12, **characterized in that**, to disconnect the toy vehicle (10, 12) from the power supply, it is removed from the car race track and in order to reconnect it to the power supply the toy vehicle (10, 12) is again placed on the car race track.

14. Process according to one of the Claims 11 through 13, , to the extent that reference is made to Claim 3, **characterized in that**, one of the third predetermined conditions is defined by the tappet (26) being in the first position and the switch (28) in the first position, where, in this third predetermined position, at least the digital address

15. Process according to one of the Claims 11 through 14, , to the extent that reference is made to Claim 3, **characterized in that**, one of the third predetermined conditions is defined by the tappet (26) being in the second position and the switch (28) within a predetermined time period changes twice from the first position into the second position and back, where, in this third predetermined condition, a predetermined fixed driving speed for this toy vehicle (10, 12) is stored in the digital decoder (24) of the toy vehicle (10, 12).

16. Process according to one of the Claims 11 through 15, , to the extent that reference is made to Claim 3, **characterized in that,** one of the third predetermined conditions is defined by the tappet (26) being in the second position, the switch (28) within a predetermined time period is changed once from the first position into the second position and back, and the switch, after the expiration of the predetermined time period, is again moved from the first position into the second position and back, where, in the case of this third predetermined condition, a fixed driving speed for this toy vehicle (10, 12) is stored in the digital decoder (24) of the toy vehicle (10, 12), where this fixed driving speed corresponds to a setting of the tappet (26) at the time of the second change of the switch (28) between the first and second positions.

## Revendications

1. Procédé pour le fonctionnement d'un système de commande numérique pour plusieurs objets à commander (10, 12), en particulier pour des automobiles-jouets guidées sur piste sur un circuit de course automobile, comprenant chacune un décodeur numérique (24) dans chacun des objets à commander (10, 12), et comprenant plusieurs appareils d'actionnement (14, 16) qui comprennent chacun au moins un élément d'actionnement (26, 28) pour la commande d'un objet (10, 12) associé à l'appareil d'actionnement, dans lequel des paquets de données à codage numérique sont transmis au décodeur numérique (24), ces paquets de données contenant respectivement au moins des données d'état dudit au moins un élément d'actionnement (26, 28) d'un appareil d'actionnement (14, 16) ainsi qu'une adresse numérique qui établit l'association entre l'appareil d'actionnement (14, 16) et un objet (10, 12) par le fait qu'une adresse numérique est associée à chaque appareil d'actionnement (14, 16) et dans le décodeur numérique (24) est mémorisée l'adresse numérique de celui des appareils d'actionnement (14, 16) auquel l'objet (10, 12) est associé, et le décodeur numérique (24) évalue dans un mode normal les paquets de données et transmet à l'objet (10, 12) uniquement des données, ou des ordres de commande dépendant des données, provenant de ceux des paquets de données qui contiennent la même adresse numérique que celle qui est mémorisée dans le décodeur numérique (24),
**caractérisé en ce que**
les données d'état d'au moins un élément d'actionnement respectif (26, 28) de tous les appareils d'actionnement (14, 16) du système de commande numérique sont saisis dans au moins un décodeur numérique (24) du système de commande numérique, et
après une séparation et une nouvelle liaison dudit au moins un décodeur numérique (24) par rapport à une alimentation électrique dudit décodeur numérique (24) celui-ci passe dans un mode de programmation lorsque lors de la séparation de ce décodeur numérique (24) vis-à-vis de l'alimentation électrique, les données d'état dudit au moins un élément d'actionnement (26, 28) d'au moins un premier appareil d'actionnement (14, 16) présentent un premier état prédéterminé et lors de la nouvelle liaison avec l'alimentation électrique les données d'état dudit au moins un élément d'actionnement (26, 28) dudit premier appareil actionnement (14, 16) présentent un second état prédéterminé différent du premier état prédéterminé.

2. Procédé selon la revendication 1, **caractérisé en ce que** le premier état prédéterminé est l'actionnement d'au moins un premier élément d'actionnement prédéterminé (26, 28) du premier appareil d'actionnement (14, 16), et le second état prédéterminé est l'actionnement d'au moins un second élément d'actionnement prédéterminé (26, 28) du premier appareil d'actionnement (14, 16).

3. Procédé selon la revendication 1 ou 2, **caractérisé en ce que**, dans le mode de programmation, en fonction d'au moins un troisième état prédéterminé dudit au moins un élément d'actionnement (26, 28) du premier appareil d'actionnement (14, 16), différent du second état prédéterminé et apparu après le changement vers le mode de programmation, des données sont mémorisées dans le décodeur numérique (24).

4. Procédé selon la revendication 3, **caractérisé en ce que** le décodeur numérique (24) quitte le mode de programmation et passe en retour dans le mode normal quand les données sont mémorisées ou quand l'état suivant dudit au moins un élément d'actionnement (26, 28) du premier appareil d'actionnement (14, 16) après le second état prédéterminé n'est aucun troisième état prédéterminé, ou encore si, après changement vers le mode de programmation, une durée prédéterminée s'est écoulée sans qu'apparaisse un autre état dudit au moins un élément d'actionnement (26, 28) du premier appareil d'actionnement (14, 16).

5. Procédé selon la revendication 3 ou 4, **caractérisé en ce que** les données mémorisées comprennent au moins l'adresse numérique de l'appareil d'actionnement (14, 16).

6. Procédé selon l'une des revendications 3 à 5, prise en dépendance de la revendication 2, **caractérisé en ce que** le troisième état prédéterminé est au moins un actionnement d'au moins un troisième élément d'actionnement prédéterminé (26, 28) de l'appareil d'actionnement (14, 16), ou au moins un actionnement du premier et/ou du second élément d'actionnement prédéterminé (26, 28), ou encore le non-actionnement de tous les éléments d'actionnement (26, 28) du premier appareil d'actionnement (14, 16).

7. Procédé selon l'une des revendications précédentes, **caractérisé en ce que** les données d'état de tous les appareils d'actionnement (14, 16) sont mémorisées dans le décodeur numérique (24) telle façon que ces données d'état restent conservées pendant au moins un temps prédéterminé après la séparation vis-à-vis de l'alimentation électrique.

8. Procédé selon la revendication 7, **caractérisé en ce que** le décodeur numérique (24) évalue les paquets de données qui arrivent après la nouvelle liaison avec l'alimentation électrique, saisit les données d'état des éléments d'actionnement (26, 28) de tous les appareils d'actionnement (14, 16) et les compare avec les données d'état mémorisées.

9. Procédé selon l'une des revendications 1 à 6, **caractérisé en ce que** dans le décodeur numérique (24) on mémorise une information concernant celui des appareils d'actionnement (14, 16) dans lequel les données d'état présentent le premier état prédéterminé, et **en ce que** cette information est mémorisée de telle façon que celle-ci est disponible pendant un temps prédéterminé également après la séparation vis-à-vis de l'alimentation électrique.

10. Procédé selon la revendication 9, **caractérisé en ce que** les paquets de données arrivant après la nouvelle liaison avec l'alimentation électrique sont évalués par le décodeur numérique (24), et celui-ci constate si les données d'état de celui des appareils d'actionnement (14, 16) dont les données d'état présentaient le premier état prédéterminé lors de cela séparation vis-à-vis de l'alimentation électrique, présentent le second état prédéterminé après la nouvelle liaison avec l'alimentation électrique.

11. Procédé selon l'une des revendications précédentes, **caractérisé en ce que** les objets à commander (10, 12) sont des automobiles-jouets d'un circuit de course automobile guidée sur piste, les appareils d'actionnement sont des régulateurs manuels (14, 16), et les éléments d'actionnement d'un régulateur manuel comprennent un poussoir (26) qui peut être déplacé en continu entre une première position entièrement déplacée hors du régulateur manuel (14, 16) jusqu'à une butée, et une seconde position totalement enfoncée dans le régulateur manuel, ainsi qu'au moins un commutateur (28) qui présente une première position et au moins une seconde position et qui est poussé dans la première position au moyen de la force d'un ressort et peut être actionné jusqu'à la seconde position à l'encontre de la force du ressort, dans lequel les paquets de données à codage numérique sont transmis via au moins deux rails électriques du circuit de course automobile guidé sur piste au décodeur numérique (24) des automobiles-jouets, et les données d'état contiennent la position du poussoir (26) et du commutateur (28), et le premier état prédéterminé est en outre défini par le fait que dans un régulateur manuel (14, 16) le commutateur (28) est poussé dans la seconde position et le poussoir (26) se trouve dans la première position.

12. Procédé selon la revendication 11, **caractérisé en ce que** le second état prédéterminé est défini par le fait que le poussoir (26) se trouve dans la seconde position et le commutateur (28) se trouve dans la première position.

13. Procédé selon la revendication 11 ou 12, **caractérisé en ce que** pour sa séparation vis-à-vis de l'alimentation électrique, l'automobile-jouet (10, 12) est enlevée du circuit de course automobile, et pour sa nouvelle liaison avec l'alimentation électrique, l'automobile-jouet (10, 12) est à nouveau posée sur le circuit de course automobile.

14. Procédé selon l'une des revendications 11 à 13, prise en dépendance de la revendication 3, **caractérisé en ce que** l'un des troisièmes états prédéterminés est défini par le fait que le poussoir (26) se trouve dans la première position et le commutateur (28) se trouve dans la première position, et dans ce troisième état prédéterminé au moins l'adresse numérique de l'appareil d'actionnement (14, 16) est mémorisée dans le décodeur numérique (24) de l'automobile-jouet (10, 12).

15. Procédé selon l'une des revendications 11 à 14, prise en dépendance de la revendication 3, **caractérisé en ce que** l'un des troisièmes états prédéterminés est défini par le fait que le poussoir (26) se trouve dans la seconde position et le commutateur (28) passe, à l'intérieur d'une durée prédéterminée, deux fois de la première position à la seconde position et en retour, et dans ce troisième état prédéterminé une vitesse de circulation fixe prédéterminée pour cette automobile-jouet (10, 12) est mémorisée dans le décodeur numérique (24) de l'automobile-jouet (10, 12).

16. Procédé selon l'une des revendications 11 à 15, prise en dépendance de la revendication 3, **caractérisé en ce que** l'un des troisièmes états prédéterminés est défini par le fait que le poussoir (26) se trouve dans la seconde position, le commutateur (28) passe à l'intérieur d'une durée prédéterminée une fois de la première position à la seconde position et à nouveau en retour, et après expiration de la durée prédéterminée le commutateur passe une autre fois de la première position à la seconde position et à nouveau en retour, et dans ce troisième état prédéterminé une vitesse de circulation fixe pour cette automobile-jouet (10, 12) est mémorisée dans le décodeur numérique (24) de l'automobile-jouet (10, 12), et cette vitesse de circulation fixe correspond à une position du poussoir (26) entre la première position et la seconde position à l'instant du second passage du commutateur (28).
